# FASCICULE DE BREVET EUROPEEN

(11) **EP 2 166 192 B1**
(45) Date de publication et mention de la délivrance du brevet: **19.09.2012**
(21) Numéro de dépôt: 09170925.3
(22) Date de dépôt: 22.09.2009
(51) Int. Cl.: E06B 9/68, E06B 9/88, G05B 19/4062

(54) **Procédé d'actionnement d'un dispositif de fermeture et d'ouverture d'un ouvrant**
Verfahren zum Antreiben einer Vorrichtung zum Schließen und Öffnen eines Öffnungselements
Method for activating a device for closing and opening a wing

(30) Priorité: 22.09.2008 FR 0856342
(43) Date de publication de la demande: 24.03.2010
(73) Titulaire: Deprat Jean SA, 59115 Leers (FR)
(72) Inventeur: Couzinet, Laurent, 59152 Chereng (FR); Kimpe, Florent, 59150 Wattrelos (FR)
(74) Mandataire: Balesta, Pierre

(56) Documents cités:
- EP-A- 0 770 757
- EP-A- 1 281 833
- FR-A- 2 867 803

## Description

La présente invention a pour objet un procédé d'actionnement d'un dispositif de fermeture et d'ouverture d'un ouvrant, et un dispositif de fermeture et d'ouverture d'un ouvrant mettant en oeuvre ce procédé.

L'invention trouve notamment une application à l'actionnement des dispositifs tels que volets roulants, stores ou similaires, ou encore tout dispositif coulissant de fermeture et d'ouverture d'un ouvrant, tel qu'une baie coulissante.

Ces dispositifs comprennent généralement un organe mobile destiné à venir obturer une ouverture. Par exemple, dans le cas d'un volet roulant, il s'agit d'un tablier qui s'enroule autour d'un tambour. Dans le cas d'une baie coulissante, cet organe mobile est constitué par une paroi généralement vitrée coulissante le long d'un guide.

Dans tous les cas, l'organe mobile se déplace entre deux positions extrêmes, l'une correspondant à l'ouverture maximale et l'autre correspondant à la fermeture maximale.

Le déplacement est obtenu par un moteur électrique qui, le plus souvent, est contrôlé par une carte électronique.

Il existe généralement des butées physiques haute et basse. Mais il est préférable de faire cesser le déplacement juste avant que l'organe mobile atteigne ces butées physiques, pour éviter toute détérioration, notamment du moteur et de l'organe mobile.

Ainsi, il est nécessaire de régler les fins de course, pour faire en sorte que le moteur ne force pas l'ouverture ou la fermeture de l'organe mobile au-delà des positions extrêmes mentionnées ci-dessus.

On connaît divers procédé permettant de régler ces fins de course. Un des procédés consiste à mémoriser ces fins de courses au moment de l'installation, de sorte que la carte électronique coupe automatiquement l'alimentation électrique du moteur lorsque l'organe mobile atteint l'une ou l'autre des deux positions extrêmes, avec éventuellement une certaine marge.

Pour ce faire, la carte électronique compte par exemple le nombre de tours effectués par le moteur, ou un de ses composants tel que son rotor, et le compare avec un nombre de tours préalablement mémorisé correspondant à l'une ou l'autre des deux positions extrêmes.

Ce comptage est effectué par rapport à une position de référence, qui est celle de l'organe mobile au moment du réglage effectué par l'installateur. Cette position de référence peut théoriquement être quelconque.

Ainsi, en comptant le nombre de tour, dans un sens de rotation ou l'autre, à partir de la position de référence, la carte électronique sait en permanence à quelle distance de la position de référence l'organe mobile se trouve.

Les fins de courses sont donc mémorisées en termes de nombres de tour depuis la position de référence. A titre d'exempte, si la position de référence correspond à l'une ou l'autre des fins de course, la fin de course concernée mémorisée dans la carte électronique correspond donc à un nombre de tour égale à 0, et l'autre fin de course également mémorisée dans la carte électronique correspond à un nombre de tour représentant la distance en nombre de tour entre les deux fins de course.

Comme indiqué ci-desstis, le réglage des fins de course, parfois appelé apprentissage des fins de course, est généralement réalisé à l'installation , par un procédé qui peut être plus ou moins automatisé.

Une fois ces fins de courses réglées, il peut arriver que l'organe mobile glisse.

Ce glissement peut avoir une origine mécanique. Par exemple, le, moteur d'enroulement/déroulement du tablier d'un volet roulant est généralement équipé d'un frein qui lui-même a tendance à glisser après un certain nombre de cycles d'utilisation.

Le glissement de l'organe mobile peut également avoir une origine électronique, En effet, les calculs effectués par la carte électronique accumulent de petites erreurs qui finissent par créer un décalage, après un certain nombre de cycles d'utilisation.

La conséquence d'un tel glissement est un fort risque d'endommagement du dispositif. En effet, si l'organe mobile glisse après un certain nombre de cycles, tel qu'expliqué ci-dessus, on risque de se retrouver avec un organe mobile qui vient taper contre une des butées physiques mentionnées plus haut. Dans ce cas, la carte électronique ne détectant pas que l'organe mobile est arrivé en fin de course, à cause du glissement, maintient l'alimentation électrique du moteur qui se met à forcer. On dit alors que le moteur force sur effort.

Si aucune sécurité n'est prévue, on comprend que l'on risque alors de casser le moteur ou l'organe mobile.

Généralement, une sécurité est prévue, qui détecte par exemple une surtension ou un surcourant dans le moteur, ce qui permet à la carte électronique de couper l'alimentation du moteur. On dit alors que le moteur force puis s'arrête sur effort.

Si on ne procède pas à une correction du problème, le moteur va forcer à chaque utilisation puisque l'organe mobile viendra systématiquement taper contre une des butées physiques.

A titre d'exemple, dans le cas d'un volet roulant équipé d'un tablier, lors du repliement, soit la lame finale du tablier reste apparente car l'enroulement du tablier ne se termine pas complètement, soit on reste en permanence en traction forcée car le moteur tente toujours d'enrouler le tablier au-delà de l'enroulement maximal.

Par ailleurs, lors du déploiement, soit on vient forcer en appui sur la butée physique, soit le tablier n'est jamais complètement déployé, laissant un espace d'ouverture correspondant au décalage, ce qui crée un inconfort et une insatisfaction de la part de l'utilisateur puisque la fermeture n'est jamais complète,

Pour résoudre ce problème, on peut bien sûr faire venir un installateur pour remettre en oeuvre le processus d'apprentissage des fins de course, ce qui est coûteux et peu pratique.

L'utilisateur peut aussi mettre en oeuvre ce processus lui-même, au risque de procéder à un mauvais réglage qui va endommager le dispositif.

Par ailleurs, on connaît des dispositifs dans lesquels le procédé dit d'apprentissage des fins de course est automatisé, et qui prévoient le lancement de ce procédé à intervalles réguliers, ou après un certain nombre de cycles d'utilisation, pour réajuster les fins de course et mémoriser ainsi les bonnes valeurs dans la carte électronique. Les intervalles peuvent être mesurés en temps, par le biais d'une horloge, ou en nombre d'évènements (par exemple montée / descente), par le biais d'un compteur d'évènements.

Un tel dispositif est par exemple décrit dans le document FR 2 867 803.

Ce type de solution permet d'évier d'avoir à faire revenir un installateur pour reconfigurer le dispositif, mais nécessite toutefois la mise en oeuvre de la totalité du processus d'apprentissage des fins de course qui peut être complexe, y compris la mémorisation dans la carte électronique des positions correspondantes.

Outre le fait que ce type de solution ne peut pas être mis en oeuvre quand le dispositif n'est pas prévu pour permettre l'apprentissage automatique des fins de course, ce type de solution n'évite pas les problèmes mentionnés ci-dessus, dans l'intervalle de temps ou de nombre d'évènements entre deux réajustements.

Ainsi, si le glissement mentionné plus haut se produit peu de temps avant le, ou à un nombre d'évènements proche du, déclenchement automatique du processus automatisé de réapprentissage des fins de course, le risque d'endommagement et les problèmes mentionnés ci-dessus sont faibles. Toutefois, la répétition du problème au cours du temps augmente les risques.

Par ailleurs, si le glissement se produit en début ou milieu de l'intervalle, le moteur viendra forcer en butée de nombreuses fois avant que le réajustement soit automatique déclenché.

L'objet de l'invention est donc d'apporter une solution aux problèmes précités parmi d'autres problèmes,

En particulier, l'objet de invention est de permettre de corriger le problème de glissement mentionné ci-dessus de façon simple et automatique.

A cette fin, l'invention se rapporte, selon un premier aspect, à un procédé d'actionnement d'un dispositif d'ouverture et de fermeture d'un ouvrant, tel qu'un volet roulant.

Un tel dispositif comprend un organe mobile, tel qu'un tablier, qui se déplace entre deux positions extrêmes par l'intermédiaire d'un moteur électrique.

Le dispositif comprend également un moyen de contrôle électronique qui gère le déplacement de l'organe mobile entre les deux positions extrêmes.

En particulier, le moyen de contrôle électronique contrôle l'alimentation du moteur. Il mesure également le déplacement de l'organe mobile en unités de déplacement à partir d'une origine de mesure. Il mémorise une première et une deuxième valeurs en unités de déplacement correspondant respectivement aux déplacements nécessaires pour que l'organe mobile atteigne les deux positions extrêmes à partir d'une position de référence correspondant à l'origine de mesure.

Les première et deuxième valeurs, ainsi que l'origine de mesure, constituent alors un référentiel de mesure mémorisé par le moyen de contrôle.

De plus, le moyen de contrôle comprend des moyens d'arrêt sur effort du moteur.

De façon caractéristique, dans le procédé de l'invention, si le moteur s'arrête sur effort dans un intervalle de n unités de déplacement avant que le moyen de contrôle électronique ait mesuré un déplacement correspondant à la première ou deuxième valeur en unités de déplacement, n étant inférieur ou égal à une valeur prédéterminée, le référentiel de mesure est décalé de telle sorte que l'écart entre les première et deuxième valeurs reste constant et que l'une de ces première et deuxième valeurs corresponde au nombre d'unités de déplacement nécessaire pour que l'organe mobile atteigne, à partir de la position de référence, la position où il se trouvait au moment de l'arrêt du moteur

Ainsi, si l'arrêt sur effort s'est produit en haut de l'ouvrant pendant l'ouverture, lors du prochain déplacement, l'organe mobile va se déplacer de la course prévue, fermant correctement l'ouvrant. Au retour, il ne viendra plus en traction en haut de l'ouvrant de sorte qu'il n'y aura plus d'arrêt sur effort du moteur.

Réciproquement, si l'arrêt sur effort s'est produit en bas de l'ouvrant pendant la fermeture, lors du prochain déplacement, l'organe mobile va se déplacer de la course prévue, ouvrant correctement cet ouvrant. Au retour, il ne viendra plus en butée en bas de l'ouvrant, de sorte qu'il n'y aura plus d'arrêt sur effort du moteur.

En outre, les positions mémorisées dans le moyen de contrôle électronique ne sont pas affectées, Elles sont déterminées une fois pour toute lors du réglage initial.

Ce procédé réduit donc au minimum les risques d'endommagement et les problèmes mentionnés plus haut. En effet, le recalage de la position de référence se fait automatiquement, dès qu'un premier et unique arrêt sur effort est détecté à proximité des positions extrêmes.

Dans une variante de mise-en oeuvre, le déplacement de l'organe mobile est mesuré en nombre de tours effectués par le moteur, ou par un des éléments composant ce moteur tel que son rotor.

Eventuellement, lorsque l'organe mobile s'enroulant sur et se déroulant d'un tambour, comme c'est le cas d'un tablier de volet roulant, le déplacement de l'organe mobile peut être mesuré en nombre de tours effectués par le tambour

Dans ces deux cas, le moyen de contrôle électronique mémorise un premier et un deuxième nombres de tours nécessaires respectivement pour atteindre les deux positions extrêmes de l'organe mobile à partir de l'origine de mesure du comptage du nombre de tours.

La valeur prédéterminée, définissant le seuil de déclenchement du déplacement ou recalage de la position de référence, peut être inférieure ou égale à 5 % de la course normale de l'organe mobile mesurée en unités de déplacement. De préférence, cette valeur prédéterminée est comprise entre 0.5% et 1.5%, de cette course normale de l'organe mobile mesurée en unités de déplacement.

L'invention se rapporte également, selon un deuxième aspect, à un dispositif d'ouverture et de fermeture d'un ouvrant, tel qu'un volet roulant.

Le dispositif comprend un organe mobile, tel qu'un tablier, se déplaçant entre deux positions extrêmes par l'intermédiaire d'un moteur électrique.

Le dispositif comprend également un moyen de contrôle électronique qui gère le déplacement de l'organe mobile entre les deux positions extrêmes.

En particulier, le moyen de contrôle électronique contrôle l'alimentation du moteur, Il mesure également le déplacement de l'organe mobile en unités de déplacement à partir d'une origine de mesure. Il mémorise une première et une deuxième valeurs en unités de déplacement correspondant respectivement aux déplacements nécessaires pour que l'organe mobile atteigne les deux positions extrêmes de l'organe mobile à partir d'une position de référence correspondant à l'origine de mesure.

Les première et deuxième valeurs, ainsi que l'origine de mesure, constituent alors un référentiel de mesure mémorisé par le moyen de contrôle.

Par ailleurs, le moyen de contrôle comprend également des moyens d'arrêt sur effort du moteur.

De façon caractéristique, le moyen de contrôle comprend des moyens de décalage aptes à décaler le référentìel de mesure, en réponse à un arrêt sur effort du moteur par les moyens d'arrêt sur effort dans un intervalle de n unités de déplacement avant que le moyen de contrôle électronique ait mesuré un déplacement correspondant à la première ou deuxième valeur en unités de déplacement, n étant inférieur ou égal à une valeur prédéterminée, de telle sorte que l'écart entre les première et deuxième valeurs reste constant et que l'une de ces première et deuxième valeurs corresponde au nombre d'unités de déplacement nécessaire pour que ledit organe mobile (2) atteigne, à partir de la position de référence (Ref), la position où il se trouvait au moment de l'arrêt du moteur (3).

Dans une variante de réalisation, le moyen de contrôle est apte à compter le nombre de tours effectués par le moteur, ou par un des éléments composant ce moteur tel que son rotor, pour mesurer le déplacement de l'organe mobile.

Eventuellement, dans le cas où l'organe mobile est apte à s'enrouler sur et se dérouler d'un tambour, comme par exemple un tablier de volet roulant, le moyen de contrôle est apte à compter le nombre de tours effectués par le tambour pour mesurer le déplacement de l'organe mobile.

Dans ces deux cas, le moyen de contrôle électronique comprend dans sa mémoire un premier et un deuxième nombres de tours nécessaires respectivement pour atteindre les deux positions extrêmes de l'organe mobile, à partir de l'origine de mesure du comptage du nombre de tours.

Le moyen de contrôle électronique peut être apte à déclencher les moyens de déplacement de la position de référence lorsque n est inférieur à une valeur déterminée elle-mônie inférieure à 5% de la course normale de l'organe mobile mesurée en unités de déplacement. De préférence, cette valeur déterminée est comprise entre 0.5% et 1.5%, de la course normale de l'organe mobile mesurée en unités de déplacement.

D'autres caractéristiques et avantages de l'invention apparaîtront plus clairement et de manière complète à la lecture de la description ci-après des variantes préférées de réalisation du dispositif, lesquelles sont données à titre d'exemples non limitatifs et en référence aux dessins annexés suivants,
- figure 1 : représente schématiquement un exemple de dispositif d'ouverture et de fermeture d'un ouvrant selon l'invention,
- figures 2a à 2c : représentent schématiquement un exemple de mise en oeuvre du procédé de l'invention,
- figures 3a à 3c : représentent schématiquement un autre exemple de mise en oeuvre du procédé de l'invention.

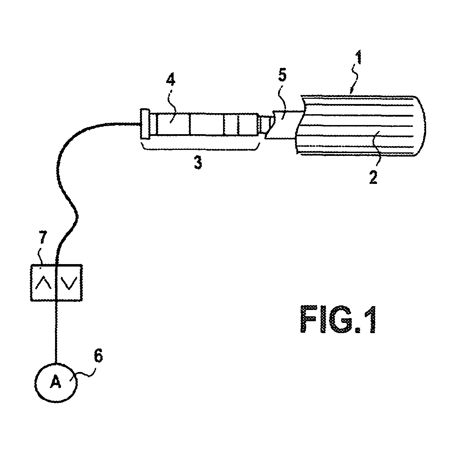

On a représenté en figure 1 schématiquement un dispositif 1 d'ouverture et de fermeture d'un ouvrant, dans une variante correspondant à un volet roulant 1 comprenant un organe mobile 2 constitué par un tablier 2 qui s'enroule et se déroule d'un tambour 5.

Le dispositif 1 est motorisé, par l'intermédiaire d'un moteur électrique 3 contrôlé par un moyen de contrôle électronique 4 tel qu'une carte électronique 4.

On prévoit un boîtier de commande 7, qui peut être distant de la carte électronique 4, mais relié à celle-cì pour lui transmettre des instructions, par exemple de montée ou de descente du tablier 2 ou organe mobile 2.

En fonction des instructions transmises par ce boîtier de commande 7, le moyen de contrôle électronique 4 gère l'alimentation du moteur électrique 3 pour le faire tourner dans un sens de rotation ou dans l'autre, donc pour faire descendre ou monter l'organe mobile 2.

L'ensemble est alimenté par une source d'alimentation électrique 6,

Comme il a été expliqué plus haut, lors de l'installation du dispositif 1, les fins de course sont réglées, pour faire en sorte que le moteur 3 ne force pas l'ouverture ou la fermeture de l'organe mobile 2 au-delà des positions extrêmes correspondant à l'ouvrant,

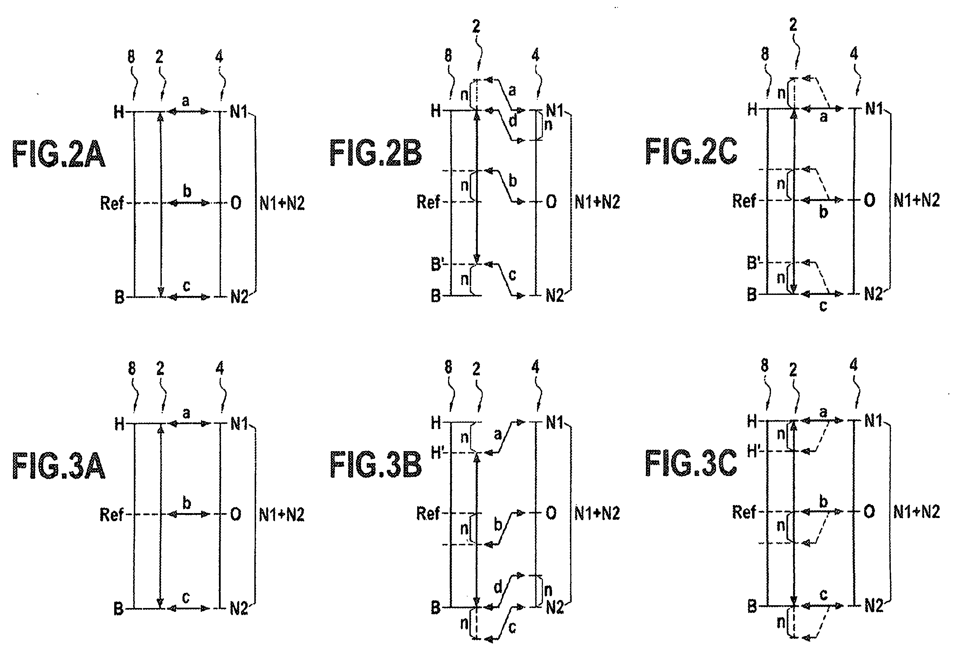

Aux figures 2a à 2c, et 3a à 3c, ces positions extrêmes sont repérées respectivement par les lettre H et B.

Quelque soit le procédé utilisé pour régler les fins de courses, celles-ci sont alors mémorisées dans la mémoire du moyen de contrôle électronique 4, de sorte que ce moyen de contrôle 4 coupe automatiquement l'alimentatíon électrique du moteur 3 lorsque l'organe mobile 2 atteint l'une ou l'autre des deux positions extrêmes, avec éventuellement une certaine marge.

Pour ce faire, le moyen de contrôle électronique 4 mesure le déplacement de l'organe mobile 2 en unités de déplacement qui peuvent être par exemple des nombres de tours effectués par le moteur 3, ou un de ses composants tel que son rotor. Il peut également s'agir du nombre de tour effectué par le tambour 5.

Ce nombre d'unités de déplacement est comparé par le moyen de contrôle 4 avec les nombres d'unités de déplacement préalablement mémorisés correspondant à l'une ou l'autre des deux positions extrêmes HetB.

La mesure ou le comptage du déplacement de l'organe mobile 2 est effectué par rapport à une origine de mesure O, correspondant à une position de référence Ref de l'organe mobile 2.

Cette position de référence peut être quelconque. Elle peut par exemple être la position de l'organe mobile 2 au moment du démarrage du réglage des fins de courses effectué par l'installateur lors de l'installation ou lors d'une maintenance.

On peut aussi prévoir, dans le procédé de réglage des fins de course, que l'installateur commence par amener l'organe mobile 2 en l'une des positions extrêmes H ou B, et que la position de référence Ref corresponde alors à cette position de référence H ou B. La valeur en unités de déplacement mémorisée alors pour atteindre cette position extrême H ou B est 0, et la valeur en unité de déplacement pour atteindre l'autre position extrême est la distance, en unités de déplacement entre les deux positions extrêmes.

Si, dans le procédé de réglage des fins de course, on a prévu que la position de référence Ref se trouve en l'une ou l'autre des positions extrêmes H et B, il n'est pas nécessaire de mémoriser la valeur 0,

Dans l'exemple représenté aux figures 2a à 2c et 3a à 3c, la position de référence Ref est placée sensiblement au milieu de la course de l'organe mobile 2 entre les deux positions extrêmes H et B.

Ainsi, en comptant le nombre d'unités de déplacement, par exemple le nombre de tours de rotation du moteur 3, dans un sens ou dans l'autre, à partir de la position de référence 0, le moyen de contrôle électronique 4 sait en permanence à quelle distance, mesurée en unités de déplacement à partir de l'origine de mesure 0, de la position de référence Ref l'organe mobile 2 se trouve.

Egalement comme indiqué plus haut, il peut arriver que l'organe mobile 2 glisse et se décale, par exemple pour des raisons mécaniques (glissement, après un certain nombre de cycles d'utilisation, du dispositif de freinage prévu pour ralentir le moteur 3 entraînant l'organe mobile 2 aux abords des positions extrêmes H et B), ou encore pour des raisons électroniques (accumulation de petites erreurs de calcul par le moyen de contrôle électronique 4 créant un décalage, après un certain nombre de cycles d'utilisation).

On a ainsi représenté le phénomène de glissement, et le procédé de correction de ce phénomène selon l'invention, dans un premier exemple, aux figures 2a à 2c.

Sur chacune de ces figures 2a à 2c, on retrouve l'ouvrant 8, avec les positions extrêmes H et B, et l'organe mobile 2 avec sa course schématisée par une double flèche verticale.

A côté de l'organe mobile 2, on a représenté schématiquement la mémoire de la carte électronique 4 ou moyen de contrôle électronique 4, sous la forme du référentiel de mesure, en correspondance avec la course de l'organe mobile 2.

Ainsi l'origine de mesure O, et les deux valeurs N₁ et N₂ du référentiel de mesure du moyen de contrôle électronique 4, correspondent respectivement à la position de référence Ref de l'organe mobile 2 et aux nombres d'unités de dép!acement nécessaires pour que l'organe mobile 2 atteigne les deux positions extrêmes H et B.

La figure 2a correspond à une première situation, alors qu'aucun glissement tel qu'expliqué ci-dessus ne s'est pas encore produit, par exemple juste après le réglage des fins de course par l'installateur.

L'origine de mesure 0 est alors correctement associée à la position de référence Ref. Cette association ou correspondance est représentée schématiquement par la double flèche horizontale b,

Par ailleurs, les deux valeurs N1 et N2 sont alors correctement associées respectivement aux deux positions extrêmes H et B, Ces associations ou correspondances sont représentées schématiquement et respectivement par les doubles flèches horizontales a et c.

Après un certain nombre de cycles d'utilisation, par exemple en raison du glissement évoqué plus haut, l'organe mobile 2 vient en butée en position extrême H, alors que le moyen de contrôle électronique 4 n'a pas encore terminé de décompter le nombre d'unités de déplacement N₁ à partir de l'origine de mesure O. C'est ce qui est représenté en figure 2b.

Lorsque l'organe mobile 2 vient de la sorte en butée en position extrême H, le moyen de contrôle 4 maintient l'alimentation électrique du moteur 3, puisque le décompte des N1 unités de déplacement n'est pas terminé, et le moteur 3 se met donc à forcer sur effort.

Dans ce cas, il se produit un surcourant ou une surtension dans le moteur 3, détecté(e) par des moyens d'arrêt sur effort compris dans le moyen de contrôle électronique 4, qui coupent alors Fermentation électrique du moteur 3.

Alternativement, on peut utiliser le ralentissement du moteur 3 comme critère de détection. Ce ralentissement se produit juste avant que le moteur 3 se mette à forcer sur effort, ou au tout début.

La figure 2b correspond donc à la situation dans laquelle, par exemple en raison du glissement évoqué plus haut, le référentiel de mesure 0, N1, N2 ne correspond plus aux trois positions Ref, H, B correspondant respectivement à la position de référence, la position extrême haute, et la position extrême basse de l'organe mobile 2,

Ainsi, l'origine de mesure 0 du référentiel est associée à une position de l'organe mobile 2 située au-dessus de la position de référence Ref (double flèches oblique b).

Par ailleurs, la valeur N1, en unités de déplacement à partir de l'origine de mesure O, est associée à une position de l'organe mobile 2 située au-dessus de la butée haute ou position extrême haute H (double flèche oblique a), donc à une position que l'organe mobile 2 ne peut pas atteindre.

On peut également constater qu'une valeur N1-n, en unités de déplacement à partir de l'origine de mesure 0, est associée à la position extrême haute H de l'organe mobile 2 (double flèche oblique d).

Enfin, la valeur N2, en unités de déplacement à partir de l'origine de mesure 0, est associée à une position B' de l'organe mobile 2 située au-dessus de la butée basse ou position extrême basse B (double flèche oblique c).

La correspondance entre le référentiel de mesure O. N1, N2 mémorisé dans le moyen de contrôle électronique 4, et la course de l'organe mobile entre les positions extrême haute H et basse B en passant par la position de référence Ref, n'est donc plus correcte.

Si le problème n'est pas corrigé, le dispositif reste dans la configuration de la figure 2b. Aussi, à chaque fermeture de l'ouvrant 8 par descente de l'organe mobile 2, celui-ci va s'arrêter avant la position extrême B, précisément en position B', puisque le moyen de contrôle 4 aura fini de décompter N₂ unités de déplacement à partir de l'origine de mesure 0 avant que l'organe mobile 2 atteigne la position extrême B. Il restera donc un espace ouvert dans l'ouvrant 8, correspondant à l'espace entre les deux positions B et B'.

Par ailleurs, à chaque ouverture de rouvrant, l'organe mobile 2 viendra de nouveau en butée en position extrême H avant que le moyen de contrôle électronique 4 ait fini de décompter le nombre d'unités de déplacement N₁ à partir de l'origine de mesure O. Le moteur 3 se mettra donc systématiquement à forcer sur effort, avant que les moyens d'arrêt sur effort compris dans le moyen de contrôle électronique 4 coupent l'alimentation électrique du moteur 3.

On prévoit donc que si le moteur 3 s'arrête sur effort à proximité de la position extrême H, comme représenté à la figure 2b, le référentiel de mesure O. N1, N2 est décalé en sorte que l'écart en unités de déplacement entre N₁ et N₂ reste constant, et en sorte que N₁ corresponde au nombre d'unités de déplacement nécessaire pour atteindre la position où se trouve l'organe mobile 2 au moment de l'arrêt sur effort du moteur 3.

On se retrouve alors dans la configuration de la figure 2c, dans laquelle le référentiel O. N1. N2 a été recalé avec N1 correspondant à la position extrême haute H de l'organe mobile 2 (double flèche a), O correspondant à la position de référence Ref de l'organe mobile 2 (double flèche b) et N2 correspondant à la position extrême basse B de l'organe mobile 2 (double flèche c),

Le moyen de contrôle 4 est prévu pour mettre en oeuvre ce recalage lorsque l'arrêt du moteur 3 sur effort se produit alors que l'organe mobile 2 se trouve à une distance n en nombre d'unités de déplacement, inférieure à une valeur prédéterminée, de la position extrême H.

En effet, l'arrêt sur effort est un mécanisme de sécurité, utile notamment pour éviter qu'une personne se retrouve coincée sous l'organe mobile 2.

Il ne faut donc pas mettre en oeuvre le décalage du référentiel de mesure dans tous les cas d'arrêt du moteur sur effort.

Il faut donc que n soit relativement faible.

En pratique, la valeur prédéterminée mémorisée dans le moyen de contrôle 4 sera inférieure ou égale à 5 % de la course normale (N₁ ⁺ N₂) de l'organe mobile 2 mesurée en unités de déplacement.

A titre d'exemple, si la longueur de l'ouverture de l'ouvrant est égale à 1 mètre, et que cette longueur correspond à une course normale du tablier 2 d'un volet roulant égale à 200 tours de rotor du moteur 3, alors un arrêt sur effort du moteur 3, à 10 tours ou moins de 10 tours de la valeur N₁ correspondant à la position extrême H, entraîne la mise en oeuvre du recalage expliqué plus haut.

Par contre, ce recalage n'est pas mis en oeuvre si l'arrêt sur effort du moteur 3 se produit à plus de 10 tours de cette valeur N₁,

Ce recalage équivaut donc à un déplacement de n unités de déplacement de la correspondance entre l'origine de mesure 0 et la position de référence Ref, (double flèche b), dans la direction de la position extrême B.

De préférence, la valeur prédéterminée mémorisée dans le moyen de contrôle 4 est comprise entre 0.5% et 1.5%, de la course normale, de l'organe mobile 2 mesurée en unités de déplacement.

Ainsi, dans l'exemple d'un ouvrant dont la longueur d'ouverture est égale à 1 mètre, cette longueur correspond à une course normale du tablier 2 d'un volet roulant égale à 200 tours de rotor du moteur 3, un arrêt sur effort du moteur 3, à 1, 2 ou 3 tours de la valeur N₁ correspondant à la position extrême H, entraîne la mise en oeuvre du recalage expliqué plus haut.

Par contre, un arrêt sur effort du moteur 3 à plus de 3 tours de cette valeur N₁ n'entraîne pas la mise en oeuvre du recalage.

On a par ailleurs représenté schématiquement le phénomène de glissement et le procédé de correction de ce phénomène selon l'invention, dans un deuxième exemple, aux figures 3a à 3b.

Sur chacune de ces figures 3a à 3c, on retrouve l'ouvrant 8, avec les positions extrêmes H et B, et l'organe mobile 2 avec sa course schématisée par une double flèche verticale.

Egalement comme sur les figures 2a à 2c, à côté de l'organe mobile 2, on a représenté schématiquement la mémoire de la carte électronique 4 ou moyen de contrôle électronique 4, sous la forme du référentiel de mesure, en correspondance avec la course de l'organe mobile 2.

Ainsi l'origine de mesure 0, et les deux valeurs N₁ et N₂ du référentiel de mesure du moyen de contrôle électronique 4, correspondent respectivement à la position de référence Ref de l'organe mobile 2 et aux nombres d'unités de déplacement nécessaires pour que l'organe mobile 2 atteigne les deux positions extrêmes H et B.

La figure 3a correspond à une première situation, alors qu'aucun glissement tel qu'expliqué ci-dessus ne s'est pas encore produit, par exemple juste après le réglage des fins de course par l'installateur.

L'origine de mesure O est alors correctement associée à la position de référence Ref, Cette association ou correspondance est représentée schématiquement par la double flèche horizontale b.

Par ailleurs, les deux valeurs N1 et N2 sont alors correctement associées respectivement aux deux positions extrêmes H et B. Ces associations ou correspondances sont représentées schématiquement et respectivement par les doubles flèches horizontales a et c.

Comme dans l'exemple précédent, après un certain nombre de cycles d'utilisation, par exemple en raison du glissement évoqué plus haut, l'organe mobile 2 vient en butée, mais cette fois en position extrême B, alors que le moyen de contrôle électronique 4 n'a pas encore terminé de décompter le nombre d'unités de déplacement N₂ à partir de l'origine de mesure O. C'est ce qui est représenté en figure 3b.

Lorsque l'organe mobile 2 vient de la sorte en butée en position extrême B, le moyen de contrôle 4 maintient l'alimentation électrique du moteur 3, puisque le décompte des N1 unités de déplacement n'est pas terminé, et le moteur 3 se met donc à forcer sur effort.

Dans ce cas, il se produit un surcourant ou une surtension dans le moteur 3, détecté(e) par des moyens d'arrêt sur effort compris dans le moyen de contrôle électronique 4, qui coupent alors l'alimentation électrique du moteur 3.

Alternativement, on peut utiliser le ralentissement du moteur 3 comme critère de détection. Ce ralentissement se produit juste avant que le moteur 3 se mette à forcer sur effort, ou au tout début.

La figure 3b correspond donc à la situation dans laquelle, par exemple en raison du glissement évoqué plus haut, le référentiel de mesure 0, N1, N2 ne correspond plus aux trois positions Ref, H, B correspondant respectivement à la position de référence, la position extrême haute, et la position extrême basse de l'organe mobile 2.

Ainsi, l'origine de mesure 0 du référentiel est associée à une position de l'organe mobile 2 située au-dessous de la position de référence Ref (double flèche oblique b).

Par ailleurs, la valeur N2, en unités de déplacement à partir de l'origine de mesure 0, est associée à une position de l'organe mobile 2 située au-dessous de la butée basse ou position extrême basse B (double flèche oblique c), donc à une position que l'organe mobile 2 ne peut pas atteindre.

On peut également constater qu'une valeur N2-n, en unités de déplacement à partir de l'origine de mesure 0, est associée à la position extrême basse B de l'organe mobile 2 (double flèche oblique d).

Enfin, la valeur N1, en unités de déplacement à partir de l'origine de mesure O, est associée à une position H' de l'organe mobile 2 située au-dessous de la butée haute ou position extrême haute H (double flèche oblique a).

La correspondance entre le référentiel de mesure O, N1, N2 mémorisé dans le moyen de contrôle électronique 4, et la course de l'organe mobile entre les positions extrême haute H et basse B en passant par la position de référence Ref, n'est donc plus correcte.

Si le problème n'est pas corrigé, le dispositif reste dans la configuration de la figure 3b. Aussi, à chaque ouverture de l'ouvrant 8 par remontée de l'organe mobile 2, celui-ci va s'arrêter avant la position extrême H, précisément en position H', puisque le moyen de contrôle 4 aura fini de décompter N₁ unités de déplacement à partir de l'origine de mesure 0 avant que l'organe mobile 2 atteigne la position extrême H. Il restera donc un espace dans l'ouvrant 8 obstrué par un morceau de l'organe mobile 2, cet espace correspondant à l'espace entre les deux positions H et H'.

Par ailleurs, à chaque fermeture de l'ouvrant, l'organe mobile 2 viendra de nouveau en butée en position extrême B avant que le moyen de contrôle électronique 4 ait fini de décompter le nombre d'unités de déplacement N₂ à partir de l'origine de mesure O. Le moteur 3 se mettra donc systématiquement à forcer sur effort, avant que les moyens d'arrêt sur effort compris dans le moyen de contrôle électronique 4 coupent l'alimentation électrique du moteur 3.

On prévoit donc que si le moteur 3 s'arrête sur effort à proximité de la position extrême B, comme représenté à la figure 3b, le référentiel de mesure 0, N1, N2 est décalé en sorte que l'écart en unités de déplacement entre N₁ et N₂ reste constant, et en sorte que N₂ corresponde au nombre d'unités de déplacement nécessaire pour atteindre la position où se trouve l'organe mobile 2 au moment de l'arrêt sur effort du moteur 3.

On se retrouve alors dans la configuration de la figure 3c, dans laquelle le référentiel O, N1, N2 a été recalé avec N1 correspondant à la position extrême haute H de l'organe mobile 2 (double flèche a), 0 correspondant à la position de référence Ref de l'organe mobile 2 (double flèche b) et N2 correspondant à la position extrême basse B de l'organe mobile 2 (double flèche c).

De la même façon qu'expliqué plus haut en ce qui concerne l'arrêt sur effort à proximité de la position extrême H, le moyen de contrôle 4 est prévu pour mettre en oeuvre ce recalage lorsque l'arrêt du moteur 3 sur effort se produit alors que l'organe mobile 2 se trouve à une distance n en nombre d'unités de déplacement, inférieure à une valeur prédéterminée, de la position extrême B.

La valeur prédéterminée mémorisée dans le moyen de contrôle 4 sera ainsi inférieure ou égale à 5 % de la course normale (N₁ + N₂) de l'organe mobile 2 mesurée en unités de déplacement.

Dans l'exemple évoqué plus haut dans lequel la longueur de l'ouverture de l'ouvrant 8 est égale à 1 mètre, cette longueur correspondant à une course normale du tablier 2 d'un volet roulant égale à 200 tours de rotor du moteur 3, un arrêt sur effort du moteur 3, à 10 tours ou moins de 10 tours de la valeur N₂ correspondant à la position extrême B, entraîne la mise en oeuvre du recalage expliqué plus haut.

Par contre, ce recalage n'est pas mis en oeuvre si l'arrêt sur effort du moteur 3 se produit à plus de 10 tours de cette valeur N₂.

Ce recalage équivaut donc à un déplacement de n unités de déplacement de la correspondance entre l'origine de mesure 0 et la position de référence Ref, dans la direction de la position extrême H.

De préférence encore, la valeur prédéterminée mémorisée dans le moyen de contrôle 4 est comprise entre 0.5% et 1.5%, de la course normale de l'organe mobile 2 mesurée en unités de déplacement.

Ainsi, dans l'exemple mentionné ci-dessus, un arrêt sur effort du moteur 3, à 1, 2 ou 3 tours de la valeur N₂ correspondant à la position extrême B, entraîne la mise en oeuvre du recalage expliqué plus haut.

Par contre, un arrêt sur effort du moteur 3 à plus de 3 tours de cette valeur N₂ n'entraîne pas la mise en oeuvre du recalage.

On limite ainsi au minimum les conséquences négatives du phénomène de glissement expliqué plus haut.

Dès qu'un tel glissement est détecté par le moyen de contrôle 4, par un arrêt sur effort du moteur 3 à proximité de l'une ou l'autre des positions extrême H et B, le recalage du référentiel de mesure dans la mémoire du moyen de contrôle 4 est mis en oeuvre.

Il ne se produit donc pas plus d'un arrêt sur effort. Par ailleurs l'effet négatif du glissement conduisant à une fermeture ou une ouverture incomplète de l'ouvrant 8, tel qu'expliqué plus haut, ne se produit qu'une seule fois également, voire pas du tout si le glissement s'est produit juste avant l'arrêt sur effort.

Il est rappelé que l'ensemble de la description ci-dessus est donné à titre d'exemple, et n'est donc pas limitatif de l'invention.

En particulier, l'invention ne se limite pas à l'actionnement d'un volet roulant pourvu d'un tablier destiné à fermé une fenêtre avec une position extrême haute et une position extrême basse.

L'invention s'applique par exemple également à une baie coulissante horizontale, avec une position extrême gauche et une position extrême droite.

## Revendications

1. Procédé d'actionnement d'un dispositif (1) d'ouverture et de fermeture d'un ouvrant (8), tel qu'un volet roulant, comprenant un organe mobile (2), tel qu'un tablier, se déplaçant entre deux positions extrêmes (H, B) par l'intermédiaire d'un moteur électrique (3), ledit dispositif (1) comprenant également un moyen de contrôle électronique (4) qui gère le déplacement dudit organe mobile (2) entre lesdites deux positions extrêmes (H, B), notamment en contrôlant l'alimentation dudit moteur (3), en mesurant le déplacement dudit organe mobile (2) en unités de déplacement à partir d'une origine de mesure (O), et en mémorisant une première (N₁) et une deuxième (N₂) valeurs en unités de déplacement correspondant respectivement aux déplacements nécessaires pour que ledit organe mobile (2) atteigne lesdites deux positions extrêmes (H, B) à partir d'une position de référence (Ref) correspondant à ladite origine de mesure (O), lesdites première (N1) et deuxième (N2) valeurs et ladite origine de mesure (O) constituant un référentiel de mesure (O, N1, N2) mémorisé par ledit moyen de contrôle (4), ce dit moyen de contrôle (4) comprenant également des moyens d'arrêt sur effort du moteur (3),
**caractérisé en ce que** si le moteur (3) s'arrête sur effort dans un intervalle de n unités de déplacement avant que ledit moyen de contrôle électronique (4) ait mesuré un déplacement correspondant à la première (N1) ou deuxième (N2) valeur en unités de déplacement, n étant inférieur ou égal à une valeur prédéterminée, ledit référentiel de mesure (O, N1, N2) est décalé de telle sorte que l'écart entre lesdites première et deuxième valeurs (N₁, N₂) reste constant et que l'une de ces dites première et deuxième valeurs (N₁, N₂) corresponde au nombre d'unités de déplacement nécessaire pour que ledit organe mobile (2) atteigne, à partir de la position de référence (Ref), la position où il se trouvait au moment de l'arrêt du moteur (3).

2. Procédé selon la revendication 1, **caractérisé en ce que** le déplacement de l'organe mobile (2) est mesuré en nombre de tours effectués par le moteur (3) ou un des éléments le composant tel que son rotor.

3. Procédé selon la revendication 1, l'organe mobile (2), tel un tablier de volet roulant, s'enroulant sur et se déroulant d'un tambour (5), **caractérisé en ce que** le déplacement dudit organe mobile (2) est mesuré en nombre de tours effectués par ledit tambour (5).

4. Procédé selon l'une quelconque des revendications 2 et 3, **caractérisé en ce que** le moyen de contrôle électronique (4) mémorise un premier (N₁) et un deuxième (N₂) nombres de tours nécessaires respectivement pour atteindre les deux positions extrêmes (H, B) de l'organe mobile (2) à partir de l'origine de mesure (O) du comptage du nombre de tours.

5. Procédé selon l'une quelconque des revendications 1 à 4, **caractérisé en ce que** la valeur prédéterminée est inférieure ou égale à 5 % de la course normale de l'organe mobile (2) mesurée en unités de déplacement, cette dite valeur prédéterminée étant de préférence comprise entre 0.5% et 1.5%, de cette course normale de l'organe mobile (2) mesurée en unités de déplacement.

6. Dispositif (1) d'ouverture et de fermeture d'un ouvrant (8), tel qu'un volet roulant, comprenant un organe mobile (2), tel qu'un tablier, se déplaçant entre deux positions extrêmes (H, B) par l'intermédiaire d'un moteur électrique (3), et un moyen de contrôle électronique (4) qui gère le déplacement dudit organe mobile (2) entre lesdites deux positions extrêmes (H, B), notamment en contrôlant l'alimentation dudit moteur (3), en mesurant le déplacement dudit organe mobile (2) en unités de déplacement à partir d'une origine de mesure (O), et en mémorisant une première (N₁) et une deuxième (N₂) valeurs en unités de déplacement correspondant respectivement aux déplacements nécessaires pour que ledit organe mobile (2) atteigne lesdites deux positions extrêmes (H, B) dudit organe mobile (2) à partir d'une position de référence (Ref) correspondant à ladite origine de mesure (O), lesdites première (N1) et deuxième (N2) valeurs et ladite origine de mesure (O) constituant un référentiel de mesure (O, N1, N2) mémorisé par ledit moyen de contrôle (4), ce dit moyen de contrôle (4) comprenant également des moyens d'arrêt sur effort du moteur (3),
**caractérisé en ce que** ledit moyen de contrôle (4) comprend des moyens de décalage aptes à décaler ledit référentiel de mesure (O, N1, N2), en réponse à un arrêt sur effort du moteur (3) par lesdits moyens d'arrêt sur effort dans un intervalle de n unités de déplacement avant que ledit moyen de contrôle électronique (4) ait mesuré un déplacement correspondant à la première (N1) ou deuxième (N2) valeur en unités de déplacement, n étant inférieur ou égal à une valeur prédéterminée, de telle sorte que l'écart entre lesdites première et deuxième valeurs (N₁, N₂) reste constant et que l'une de ces dites première et deuxième valeurs (N₁, N₂) corresponde au nombre d'unités de déplacement nécessaire pour que ledit organe mobile (2) atteigne, à partir de la position de référence (Ref), la position où il se trouvait au moment de l'arrêt du moteur (3).

7. Dispositif selon la revendication 6, **caractérisé en ce que** le moyen de contrôle (4) est apte à compter le nombre de tours effectués par le moteur (3) ou un des éléments le composant tel que son rotor, pour mesurer le déplacement de l'organe mobile (2).

8. Dispositif selon la revendication 6, **caractérisé en ce que** l'organe mobile (2), tel un tablier de volet roulant, est apte à s'enrouler sur et se dérouler d'un tambour (5), et **en ce que** le moyen de contrôle (4) est apte à compter le nombre de tours effectués par ledit tambour (5) pour mesurer le déplacement dudit organe mobile (2).

9. Dispositif selon l'une quelconque des revendications 7 et 8, **caractérisé en ce que** le moyen de contrôle électronique (4) comprend dans sa mémoire un premier et un deuxième nombres de tours (N₁, N₂) nécessaires respectivement pour atteindre les deux positions extrêmes (H, B) de l'organe mobile (2) à partir l'origine de mesure (O) du comptage du nombre de tours.

10. Dispositif selon l'une quelconque des revendications 6 à 9, **caractérisé en ce que** le moyen de contrôle électronique (4) est apte à déclencher les moyens de décalage de la position de référence (O) lorsque n est inférieur à une valeur déterminée elle-même inférieure à 5% de la course normale de l'organe mobile (2) mesurée en unités de déplacement, cette dite valeur déterminée étant de préférence comprise entre 0.5% et 1.5%, de cette course normale de l'organe mobile (2) mesurée en unités de déplacement.

## Claims

1. A method for actuating a device (1) to open and close an opening element (8), such as a roller shutter, comprising a mobile member (2) such as a curtain moving between two end positions (H, B) by means of an electric motor (3), the said device (1) also comprising electronic control means (4) which manage the travel of the said mobile member (2) between the said two end positions (H, B) in particular by controlling the powering of the said motor (3), by measuring the travel distance of the said mobile member (2) in travel units starting from a measurement origin (0) and by memorising a first (N₁) and a second (N₂) value in travel units respectively corresponding to the travel distances required so that the said mobile member (2) reaches the said two end positions (H, B) from a reference position (Ref) corresponding to the said measurement origin (O), the said first (N1) and second (N2) values and the said measurement origin (0) forming a measurement frame of reference (O, N1, N2) memorised by the said control means (4), these said control means (4) further comprising motor forcing cut-off means of the motor (3),
**characterized in that** if the motor (3) is stopped after forcing within an interval of n travel units before the said electronic control means (4) have measured a travel distance corresponding to the first (N1) or second (N2) value in travel units, n being equal to or less than a predetermined value, the said measurement frame of reference (O,N1,N2) is shifted so that the difference between the said first and second values (N₁, N₂) remains constant and one of these said first and second values (N₁, N₂) corresponds to the number of travel units required so that the said mobile member (2), from the reference position (Ref), can reach the position in which it lay at the time of stopping of the motor (3).

2. The method according to claim 1, **characterized in that** the travel of the mobile member (2) is measured in number of rotations of the motor (3) or of one of its constituent components such as its rotor.

3. The method according to claim 1, the mobile member (2) such as a curtain of a roller shutter being wound on and unwound from a drum (5), **characterized in that** the travel of the said mobile member (2) is measured in the number of rotations of the said drum (5).

4. The method according to anyone of claims 2 and 3, **characterized in that** the electronic control means (4) memorise a first (N₁) and a second (N₂) number of rotations respectively needed to reach the two end positions (H, B) of the mobile member (2) as from the measurement origin (0) for counting the number of rotations.

5. The method according to anyone of claims 1 to 4 **characterized in that** the predetermined value is equal to or less than 5 % of the normal travel distance of the mobile member (2) measured in travel units, this said predetermined value preferably being between 0.5 % and 1.5 % of this normal travel distance of the mobile member (2) measured in travel units.

6. A device (1) to open and close an opening element (8), such as a roller shutter, comprising a mobile member (2) such as a curtain moving between two end positions (H, B) by means of an electric motor (3), and electronic control means (4) which manage the travel of the said mobile member (2) between the said two end positions (H, B) in particular by controlling the powering of the said motor (3), by measuring the travel of the said mobile member (2) in travel units starting from a measurement origin (O), and by memorising a first (N₁) and a second (N₂) value in travel units respectively corresponding to the travel distance required so that the said mobile member (2) reaches the said two end positions (H, B) of the said mobile member (2) from a reference position (Ref) corresponding to the said measurement origin (O), the said first (N1) and second (N2) values and the said measurement origin (O) forming a measurement frame of reference (0, N1, N2) memorised by the said control means (4), these said control means (4) further comprising motor forcing cut-off means of the motor (3),
**characterized in that** the said control means (4) comprise shifting means capable of shifting the said measurement frame of reference (O,N1,N2) in response to cut-out of the motor (3) after forcing by the said motor forcing cut-off means within an interval of n travel units before the said electronic control means (4) have measured a travel distance corresponding to the first (N1) or second (N2) value in travel units, n being equal to or less than a predetermined value, so that the difference between the said first and second values (N₁, N₂) remains constant and one of these said first and second values (N₁, N₂) corresponds to the number of travel units needed so that the said mobile member (2), from the reference position (Ref), can reach the position in which it lay at the time of stopping of the motor (3).

7. The device according to claim 6, **characterized in that** the control means (4) are capable of counting the number of rotations of the motor (3) or of one its constituent components such as its rotor, to measure the travel distance of the mobile member (2).

8. The device according to claim 6, **characterized in that** the mobile member (2), such as a curtain of a roller shutter, is capable of winding on and unwinding from a drum (5) and **in that** the control means (4) are capable of counting the number of rotations made by the said drum (5) to measure the travel distance of the said mobile member (2).

9. The device according to anyone of claims 7 and 8, **characterized in that** the electronic control means (4) comprise in their memory a first a second number of rotations (N₁, N₂) respectively needed to reach the two end positions (H, B) of the mobile member (2) as from the measurement origin (0) for counting the number of rotations.

10. The device according to anyone of claims 6 to 9, **characterized in that** the electronic control means (4) are capable of triggering the means for shifting the reference position (O) when n is lower than a determined value this value itself being 5 % less than the normal travel distance of the mobile member (2) measured in travel units, this said determined value preferably being between 0.5 % and 1.5 % of this normal travel distance of the mobile member (2) measured in travel units.

## Patentansprüche

1. Verfahren zum Betätigen einer Vorrichtung (1) zum Öffnen und Schließen eines zu öffnenden Elements (8), wie eines Rolladens, umfassend ein bewegliches Organ (2), wie einen Panzer, das sich mittels eines Elektromotors (3) zwischen zwei Endstellungen (H, B) bewegt, wobei die Vorrichtung (1) auch ein elektronisches Steuermittel (4) umfaßt, das die Bewegung des beweglichen Organs (2) zwischen den beiden Endstellungen (H, B) steuert, insbesondere dadurch, daß die Versorgung des Motors (3) gesteuert wird, daß die Bewegung des beweglichen Organs (2) in Bewegungseinheiten ausgehend von einem Meßausgangspunkt (O) gemessen wird und daß ein erster Wert (N₁) und ein zweiter Wert (N₂) als Bewegungseinheiten gespeichert werden, die jeweils den erforderlichen Bewegungen entsprechen, damit das bewegliche Organ (2) ausgehend von einer dem Meßausgangspunkt (O) entsprechenden Bezugsposition (Ref) die beiden Endstellungen (H, B) erreicht, wobei der erste Wert (N1) und der zweite Wert (N2) sowie der Meßausgangspunkt (O) ein Meßbezugssystem (O, N1, N2) bilden, das durch das Steuermittel (4) gespeichert wird, wobei dieses Steuermittel (4) auch Mittel zum Abschalten des Motors (3) bei Belastung umfaßt,
**dadurch gekennzeichnet, daß** wenn der Motor (3) in einem Intervall von n Bewegungseinheiten bei Belastung abschaltet, bevor das elektronische Steuermittel (4) eine dem ersten (N₁) oder zweiten (N₂) Wert entsprechende Bewegung in Bewegungseinheiten gemessen hat, wobei n kleiner oder gleich einem vorbestimmten Wert ist, das Meßbezugssystem (O, N1, N2) derart verschoben wird, daß der Abstand zwischen dem ersten und dem zweiten Wert (N₁, N₂) konstant bleibt und daß der eine dieser ersten und zweiten Werte (N₁, N₂) der Anzahl der Bewegungseinheiten entspricht, die erforderlich ist, damit das bewegliche Organ (2) ausgehend von der Bezugsposition (Ref), die Position erreicht, in der es sich zum Zeitpunkt des Abschaltens des Motors (3) befand.

2. Verfahren nach Anspruch 1, **dadurch gekennzeichnet, daß** die Bewegung des beweglichen Organs (2) in der Anzahl der durch den Motor (3) oder durch eines der ihn bildenden Elemente, wie seinen Rotor, ausgeführten Umdrehungen gemessen wird.

3. Verfahren nach Anspruch 1, wobei das bewegliche Organ (2), wie ein Rolladenpanzer, sich auf eine Trommel (5) aufwickelt und hiervon abwickelt, **dadurch gekennzeichnet, daß** die Bewegung des beweglichen Organs (2) in der Anzahl der durch die Trommel (5) ausgeführten Umdrehungen gemessen wird.

4. Verfahren nach einem der Ansprüche 2 und 3, **dadurch gekennzeichnet, daß** das elektronische Steuermittel (4) eine erste Anzahl (N₁) und eine zweite Anzahl (N₂) von Umdrehungen speichert, die jeweils erforderlich sind, um die beiden Endstellungen (H, B) des beweglichen Organs (2) ausgehend von dem Meßausgangspunkt (O) der Zählung der Umdrehungszahl zu erreichen.

5. Verfahren nach einem der Ansprüche 1 bis 4, **dadurch gekennzeichnet, daß** der vorbestimmte Wert kleiner oder gleich 5 % des in Bewegungseinheiten gemessenen normalen Weges des beweglichen Organs (2) ist, wobei dieser vorbestimmte Wert vorzugsweise zwischen 0,5 % und 1,5 % dieses in Bewegungseinheiten gemessenen normalen Weges des beweglichen Organs (2) ist.

6. Vorrichtung (1) zum Öffnen und Schließen eines zu öffnenden Elements (8), wie eines Rolladens, umfassend ein bewegliches Organ (2), wie einen Panzer, das sich mittels eines Elektromotors (3) zwischen zwei Endstellungen (H, B) bewegt, sowie ein elektronisches Steuermittel (4), das die Bewegung des beweglichen Organs (2) zwischen den beiden Endstellungen (H, B) steuert, insbesondere dadurch, daß die Versorgung des Motors (3) gesteuert wird, daß die Bewegung des beweglichen Organs (2) in Bewegungseinheiten ausgehend von einem Meßausgangspunkt (O) gemessen wird und daß ein erster Wert (N₁) und ein zweiter Wert (N₂) als Bewegungseinheiten gespeichert werden, die jeweils den erforderlichen Bewegungen entsprechen, damit das bewegliche Organ (2) ausgehend von einer dem Meßausgangspunkt (O) entsprechenden Bezugsposition (Ref) die beiden Endstellungen (H, B) des beweglichen Organs (2) erreicht, wobei der erste Wert (N1) und der zweite Wert (N2) sowie der Meßausgangspunkt (O) ein Meßbezugssystem (O, N1, N2) bilden, das durch das Steuermittel (4) gespeichert wird, wobei dieses Steuermittel (4) auch Mittel zum Abschalten des Motors (3) bei Belastung umfaßt,
**dadurch gekennzeichnet, daß** das Steuermittel (4) Verschiebemittel umfaßt, die geeignet sind, das Meßbezugssystem (O, N1, N2) - als Reaktion auf ein Abschalten des Motors (3) bei Belastung durch die Lastabschaltmittel, in einem Intervall von n Bewegungseinheiten, bevor das elektronische Steuermittel (4) eine dem ersten (N1) oder zweiten (N2) Wert entsprechende Bewegung in Bewegungseinheiten gemessen hat, wobei n kleiner oder gleich einem vorbestimmten Wert ist - derart zu verschieben, daß der Abstand zwischen dem ersten und dem zweiten Wert (N₁, N₂) konstant bleibt und daß der eine dieser ersten und zweiten Werte (N₁, N₂) der Anzahl der Bewegungseinheiten entspricht, die erforderlich ist, damit das bewegliche Organ (2) ausgehend von der Bezugsposition (Ref), die Position erreicht, in der es sich zum Zeitpunkt des Abschaltens des Motors (3) befand.

7. Vorrichtung nach Anspruch 6, **dadurch gekennzeichnet, daß** das Steuermittel (4) geeignet ist, die Anzahl der durch den Motor (3) oder durch eines der ihn bildenden Elemente, wie seinen Rotor, ausgeführten Umdrehungen zu zählen, um die Bewegung des beweglichen Organs (2) zu messen.

8. Vorrichtung nach Anspruch 6, **dadurch gekennzeichnet, daß** das bewegliche Organ (2), wie ein Rolladenpanzer, geeignet ist, sich auf eine Trommel (5) aufzuwickeln und hiervon abzuwickeln, und daß das Steuermittel (4) geeignet ist, die Anzahl der durch die Trommel (5) ausgeführten Umdrehungen zu zählen, um die Bewegung des beweglichen Organs (2) zu messen.

9. Vorrichtung nach einem der Ansprüche 7 und 8, **dadurch gekennzeichnet, daß** das elektronische Steuermittel (4) in seinem Speicher eine erste und eine zweite Anzahl von Umdrehungen (N₁, N₂) enthält, die jeweils erforderlich sind, um die beiden Endstellungen (H, B) des beweglichen Organs (2) ausgehend von dem Meßausgangspunkt (O) der Zählung der Umdrehungszahl zu erreichen.

10. Vorrichtung nach einem der Ansprüche 6 bis 9, **dadurch gekennzeichnet, daß** das elektronische Steuermittel (4) geeignet ist, die Mittel zum Verschieben der Bezugsposition (O) auszulösen, wenn n kleiner als ein bestimmter Wert ist, der selbst kleiner als 5 % des in Bewegungseinheiten gemessenen normalen Weges des beweglichen Organs (2) ist, wobei dieser bestimmte Wert vorzugsweise zwischen 0,5 % und 1,5 % dieses in Bewegungseinheiten gemessenen normalen Weges des beweglichen Organs (2) ist.
